# EUROPÄISCHE PATENTSCHRIFT

(11) **EP 1 422 032 B1**
(45) Veröffentlichungstag und Bekanntmachung des Hinweises auf die Patenterteilung: **21.03.2007**
(21) Anmeldenummer: 03026680.3
(22) Anmeldetag: 20.11.2003
(51) Int. Cl.: B27B 9/00, B28D 1/04, B23D 45/16, B23D 59/00

(54) **Elektrohandwerkzeugmaschine**
Electric hand tool
Machine-outil électrique

(30) Priorität: 22.11.2002 DE 10254577; 07.02.2003 DE 10305033
(43) Veröffentlichungstag der Anmeldung: 26.05.2004
(73) Patentinhaber: ROBERT BOSCH GMBH, 70442 Stuttgart (DE)
(72) Erfinder: Bohne, Ulrich, 72664 Kohlberg (DE); Hild, Eugen, 72631 Aichtal (DE); Baumgartner, Klaus, 71067 Sindelfingen (DE); Dockner, Daniel, 70327 Stuttgart (DE); Roehm, Heiko, 70176 Stuttgart (DE)

(56) Entgegenhaltungen:
- DE-A- 4 003 029
- DE-C- 644 011
- US-A- 4 414 743

## Beschreibung

### Stand der Technik

Die Erfindung geht aus von einer Elektrohandkreissägemaschine nach dem Oberbegriff des Anspruchs 1.

Bei Elektrohandwerkzeugmaschinen mit rotierenden Werkzeugen, insbesondere Elektrohandkreissägemaschinen, wird das durch das rotierende Werkzeug vom Werkstück abgetragene Material, z. B. Späne oder Staub, aus der Schutzhaube direkt ins Freie geleitet, wodurch z. B. bei Längsschnitten das abgetragene Material die Schnittvorgabelinie verdeckt und/oder den Bediener direkt trifft, was insgesamt das Arbeiten mit der Maschine erheblich beeinträchtigt.

Es ist eine Handkreissägemaschine der eingangs genannten Art bekannt (US 44 14 743), bei der der hohle Zusatzgriff als Abführkanal für den vom Werkzeug ausgeworfenen Materialabtrag genutzt wird. Der Zusatzgriff hat einen quer in das Innere der Schutzhaube einmündenden Einlass und am anderen Griffende einen Auslass, der in ein besonderes Ventilatorgehäuse des Motorgehäuses einmündet. Im Motorgehäuse befindet sich ein luftgekühlter Elektromotor, der auf seiner Abtriebswelle einen Kühlventilator aufweist zur Motorkühlung. Am gegenüberliegenden Ende ragt die Motorabtriebswelle in das Ventilatorgehäuse hinein und trägt dort einen zusätzlichen Ventilator, der als Radialventilator ausgebildet ist. Das Ventilatorgehäuse steht mit einem Abfuhrstutzen in Verbindung, an dem ein Staubsack angebracht werden kann. Das den Radialventilator enthaltende Ventilatorgehäuse enthält Wanddurchbrüche, durch die von außen Luft ansaugbar ist. Bei laufendem Elektromotor wird dieser vom Kühlventilator gekühlt. Das im Ventilatorgehäuse befindliche Radialgebläse soll über den Einlass des Zusatzgriffes Luft und bei der Bearbeitung eines Werkstücks anfallenden Staub aus dem Bereich der Schutzhaube durch den Zusatzgriff hindurch bis zu dessen Ende saugen, das in das Ventilatorgehäuse mündet. Von dort wird die Luft mit dem Staub über den Abfuhrstutzen nach außen abgeführt. Die Maschine ist relativ aufwendig und voluminös, da zusätzlich zum Kühlventilator zum Kühlen des Motors ein zusätzlicher Ventilator am gegenüberliegenden Ende der Abtriebswelle in einem besonderen Ventilatorgehäuse vorgesehen ist, um durch den Zusatzgriff hindurch vom Werkzeug ausgeworfenen Materialabtrag abzusaugen.

Aus DE 644 011 ist eine Nutenfräsmaschine bekannt, bei der an das den Elektromotor enthaltende Motorgehäuse ein Zusatzgriff mit innerem Luftkanal angesetzt ist. Oberhalb des Werkzeugs ist eine Haube angeordnet, die einen zum Motorgehäuse hin gerichteten Auslass aufweist, an den ein Staubsammler angebracht werden kann. Zwischen der Haube und dem Elektromotor erstreckt sich der Zusatzgriff, der im Inneren hohl ist und als Luftleitkanal lediglich für Kühlluft dient, die, nachdem sie im Elektromotor ihre Kühlwirkung ausgeübt hat, in einen Einlass des Zusatzgriffs eingeleitet, durch den Zusatzgriff hindurchgeleitet und am Auslass des Zusatzgriffs in die anschließende Haube eingeführt wird. In dieser soll die Luft saugend auf den unteren Teil der Haube und auf den Raum, in dem sich das Werkzeug befindet, derart einwirken, dass dort unter Beeinflussung des Saugzuges des zusätzlichen Kühlluftstromes ein Staub-Luft-Gemisch weggefördert und in eine Staubabführleitung geführt wird.

Aus DE 40 03 029 A1 ist ein Radialgebläse mit einem Lüfterrad bekannt, das in einem spiralig gewundenen Luftführungskanal enthalten ist.

### Vorteile der Erfindung

Die erfindungsgemäße Elektrohandkreissägemaschine mit den Merkmalen des Anspruchs 1 hat den Vorteil, dass der von den Spänen oder Staub gebildete Materialabtrag vom rotierenden Werkzeug direkt in den hohlen Zusatzgriff hineingeschleudert wird und durch die kinetische Energie der Drehung dabei eine relativ hohe Eintrittsgeschwindigkeit aufweist. Der Materialabtrag wird direkt an der Entstehungsstelle, also am Werkzeugaustritt, abgegriffen und entfernt von der Bearbeitungsstelle ausgeworfen. Gemäß der Erfindung ist im Maschinengehäuse ein luftgekühlter Elektromotor zum Antrieb des Werkzeugs aufgenommen und das Maschinengehäuse so ausgebildet, dass die Motorabluft in den Zusatzgriff einströmt. Die Motorabluft wird dabei in diejenige Richtung in den Einlass des Zusatzgriffs eingeleitet, in welcher der Materialabtrag das rotierende Werkzeug verlässt und in den Einlass eintritt. Im Maschinengehäuse ist ein die Motorabluft führender, geschlossener Luftkanal vorgesehen, der schneckenförmig ausgebildet ist und sich zum Einlass des Zusatzgriffs hin erweitert. Die einströmende Motorabluft unterstützt die Förderung des Materialabtrags bis zum Auslass im Zusatzgriff, so dass ein Verstopfen des Zusatzgriffs durch den Materialabtrag sicher verhindert wird.

Gemäß einer vorteilhaften Ausführunsform der Erfindung ist der hohle Zusatzgriff als Bügelgriff ausgebildet, der mit seinem einen Griffende an der Schutzhaube ansetzt und an oder nahe seinem von der Schutzhaube abgekehrten anderen Griffende an einem den Elektromotor aufnehmenden Gehäuseteil des Maschinengehäuses festgelegt ist. Dadurch wird eine solide, mechanische Anbindung des Zusatzgriffs an das Maschinengehäuse erreicht und eine sichere Handhabung der Maschine sowohl für Links- als auch Rechtshänder ermöglicht, die auch flexible Greifposition bei unterschiedlichen Arbeitsfällen erlaubt.

Gemäß einer vorteilhaften Ausführungsform der Erfindung ist der Zusatzgriff oder ein einen Auslaß des Zusatzgriffs umschließender Auslaßstutzen schwenkbar ausgebildet. Damit kann die Auswurfrichtung des Materialabtrags so eingestellt werden, daß er bei keinem Arbeitsfall den Bediener behindert. Der schwenkbare und in der eingestellten Schwenkposition einrastbare Zusatzgriff ermöglicht zusätzlich durch Anpassung an individuelle Greifgewohnheiten des Bedieners eine individuelle Optimierung der Ergonomie der Maschine.

### Zeichnung

Die Erfindung ist anhand eines in der Zeichnung dargestellten Ausführungsbeispiels in der nachfolgenden Beschreibung näher erläutert. Es zeigen in perspektivischer Darstellung:
- Fig. 1: eine Ansicht einer Elektrohandkreissägemaschine,
- Fig. 2: eine Draufsicht der Elektrohandkreissägemaschine gemäß Fig. 1 ohne Auflageplatte,
- Fig. 3: eine Seitenansicht der Elektrohandkreissägemaschine gemäß Fig. 2 nach Entfernung von Schutzhaube und Kreissägeblatt,
- Fig. 4: eine Seitenansicht der Elektrohandkreissägemaschine gemäß Fig. 1 bei entfernter Schutzhaube für das Kreissägeblatt.

### Beschreibung des Ausführungsbeispiels

Die in der Zeichnung in verschiedenen Ansichten zu sehende Elektrohandkreissägemaschine als Ausführungsbeispiel für eine allgemeine Elektrohandwerkzeugmaschine zur spanenden oder schleifenden Bearbeitung von Werkstücken weist ein zweischaliges Maschinengehäuse 10 mit einem angeformten Handgriff 11 zum Führen und Handhaben der Maschine und mit einem angesetzten Motorgehäuse 12 auf, in dem ein luftgekühlter Elektromotor aufgenommen ist. Der Elektromotor treibt über ein hier nicht zu sehendes, einstufiges Getriebe eine Antriebswelle 13 an, auf dem ein Kreissägeblatt 14 festgespannt ist. Das Kreissägeblatt 14 ist im oberen Bereich von einer Schutzhaube 15 abgedeckt, die auf das Maschinengehäuse 10 aufgeschraubt ist. Die Schutzhaube 15 reicht bis zu einer mit dem Maschinengehäuse 10 verbundenen Auflageplatte 16, mit welcher die Maschine beim Sägevorgang auf das Werkstück aufgesetzt wird. Das Kreissägeblatt 14 ragt durch die Auflageplatte 16 hindurch und steht je nach gewünschter Schnittiefe über diese mehr oder weniger nach unten vor. Zum Einstellen der Schnittiefe der Maschine ist die Auflageplatte 16 um eine in Arbeitsrichtung vor dem Kreissägeblatt 14 am Maschinengehäuse 10 festgelegte Schwenkachse schwenkbar, wobei die gewählte Schwenkstellung mittels einer Einstellvorrichtung fixiert wird. Eine auf der Auflageplatte 16 angeordnete weitere Einstellvorrichtung 17 ermöglicht durch Schwenken der Auflageplatte 16 um eine sich parallel zur Sägeblattebene erstreckende Längsachse eine Schnittwinkeleinstellung der Maschine.

Für eine beidhändige Führung der Maschine zum Sägen ist ein Zusatzgriff 21 vorgesehen, der als Bügelgriff ausgebildet und in Arbeitsrichtung der Maschine gesehen vor der Antriebswelle 13 des Kreissägeblatts 14 nahe dessen vorderen Bereichs an dem Maschinengehäuse 10 angeordnet ist. Der im folgenden als Bügelgriff 21 bezeichnete Zusatzgriff setzt mit einem Griffende an der Schutzhaube 15 an, verläuft mit einem zur Rotationsachse des Kreissägeblatts 14 im wesentlichen parallelen Griffbereich 211 oberhalb der Auflageplatte 16 im Abstand von dieser und ist mit seinem anderen Griffende am Motorgehäuse 12 festgelegt. Dadurch ist eine sehr solide mechanische Anbindung des Bügelgriffs 21 an dem Maschinengehäuse 10 gewährleistet. Mit Hilfe des Bügelgriffs 21 kann die Maschine sehr exakt plan auf das Werkstück aufgesetzt und beim Sägen beidhändig sehr gut gehalten und geführt werden, wobei der große Greifbereich des Bügelgriffs 21 eine ergonomische und sichere Handhabung der Maschine in allen Arbeitsfällen sowohl für Rechts- als auch für Linkshänder sicherstellt. Außerdem ist es möglich, die Maschine mittels des Bügelgriffs 21 in ihrem Schwerpunkt zu tragen.

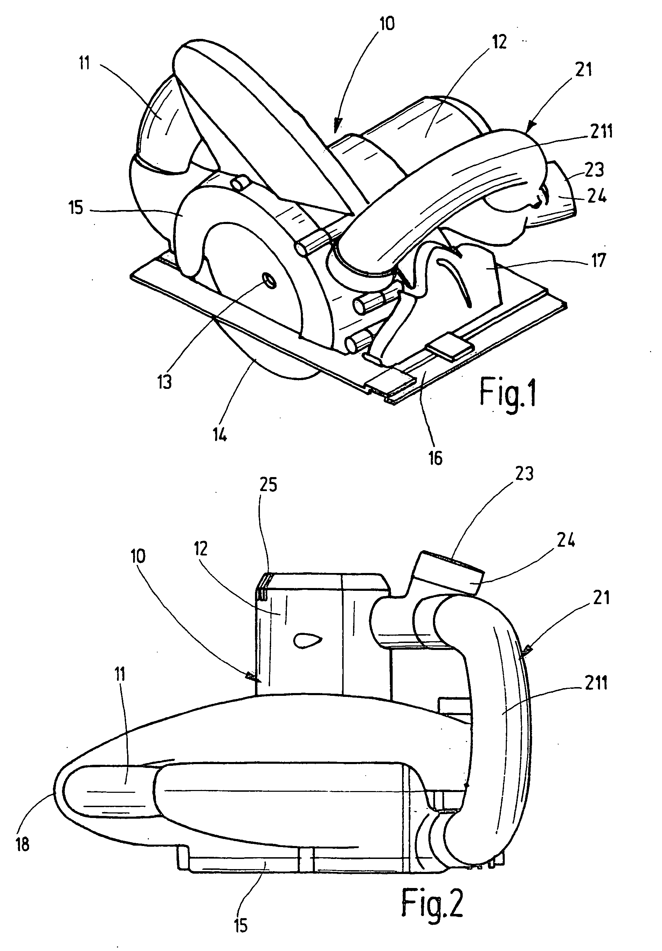

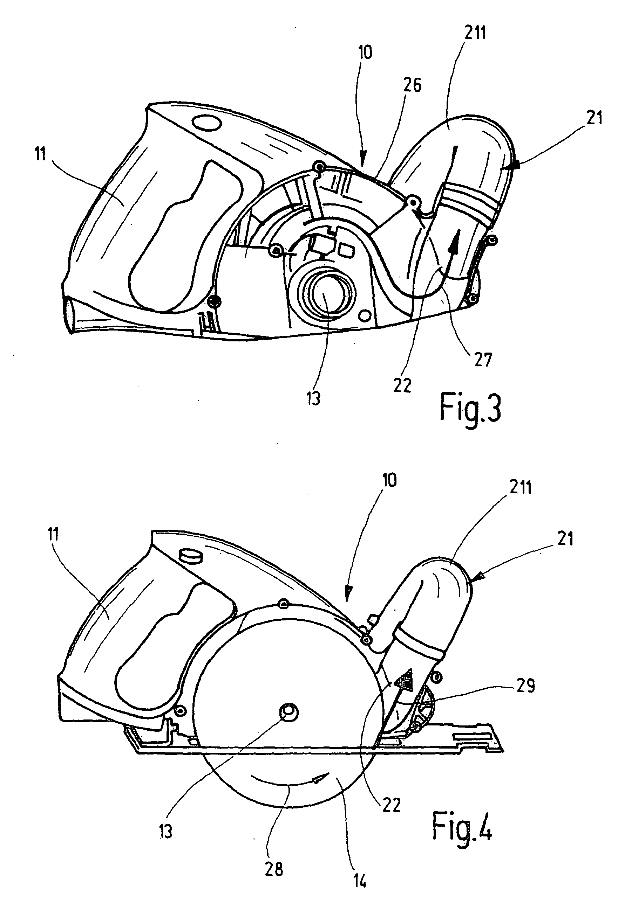

Der Bügelgriff 21 ist hohl ausgebildet und weist einen zum Innern der Schutzhaube 15 hin offenen Einlaß 22 (Fig. 3 und 4) und einen hinter dem Griffbereich 211 angeordneten Auslaß 23 (Fig. 1 und 2) auf, der vorzugsweise an oder nahe dem von dem Einlaß 22 abgekehrten Griffende des Bügelgriffs 21 liegt. Der Auslaß 23 ist von einem Auslaßstutzen 24 umschlossen, der vorteilhafterweise schwenkbar ausgebildet sein kann. Für die Luftkühlung des Elektromotors weist das Motorgehäuse 12 Lufteintrittsschlitze 25 (Fig. 2) auf, durch die hindurch ein auf der Abtriebswelle des Elektromotors drehfest sitzendes Lüfterrad (hier nicht dargestellt) Luft ansaugt. Die vom Lüfterrad angesaugte Luft durchströmt den Elektromotor und wird als wärmeabführende Motorabluft ausgeblasen, die dann so geführt wird, daß sie in den Einlaß 22 des hohlen Bügelgriffs 21 einströmt. Hierzu ist im Maschinengehäuse 10 ein Luftkanal 26 ausgebildet, der sich zum Einlaß 22 des Bügelgriffs 21 hin erweitert und in dem Einlaß 22 mündet (Fig. 3). Die Luft wird von dem Lüfterrad aus dem Innern des Elektromotors in eine in Fig. 3 verdeckte Lufteintrittsöffnung des Luftkanals 26 eingeblasen. Die Motorabluft strömt, wie durch den Pfeil 27 in Fig. 3 symbolisiert ist, durch den Luftkanal 26, den hohlen Bügelgriff 21 und tritt an dem vom Auslaßstutzen 24 umschlossen Auslaß 23 im Bügelgriff 21 ins Freie. Der Auslaßstutzen 24 ist so ausgerichtet, daß die Strömungsrichtung der hier ausströmende Motorabluft vom Bediener der Maschine wegweist. Ist der Auslaßstutzen 24 schwenkbeweglich ausgeführt, so kann der Bediener die ihm genehme oder an den Arbeitsfall angepaßte Luftausströmrichtung individuell einstellen.

Da, wie vorstehend erwähnt, zwischen dem Elektromotor und der Antriebswelle 13 des Kreissägeblatts 14 ein einstufiges Getriebe angeordnet ist, sind die Drehrichtungen von Rotor des Elektromotors und Kreissägeblatt 14 invers. Die Rotationsrichtung des Kreissägeblatts 14 ist in Fig. 4 durch den Pfeil 28 gekennzeichnet. Damit die den Elektromotor verlassende Motorabluft strömungsgünstig über den Luftkanal 26 in den Bügelgriff 21 geleitet wird, ist der Luftkanal 26 geschlossen und schneckenförmig ausgeführt, wie dies teilweise in Fig. 3 zu sehen ist, verläuft also von seiner Lufteintrittsöffnung bis hin zum Einlaß 22 des Bügelgriffs 21 als eine sich axial ausdehnende Spirale, wobei der lichte Durchmesser des Luftkanals 26 vorzugsweise stetig zunimmt.

Der hohle Bügelgriff 21 wird dazu genutzt, den am Kreissägeblatt 14 entstehenden Sägestaub aufzunehmen und vom Werkstück und vom Bediener weggerichtet auszuwerfen. Hierzu ist der Einlaß 22 des Bügelgriffs 21 so gestaltet, daß die in Fig. 4 durch den Pfeil 29 gekennzeichnete Abstrahlrichtung des Sägestaubs oder der Sägespäne so festgelegt ist, daß der Sägestaub beim Verlassen der Sägeblattschneiden direkt in den Einlaß 22 des Bügelgriffs 21 trifft. Vorzugsweise ist hierzu der Einlaß 22 so plaziert, daß die Normale auf der Einlaßöffnung mit der tangentialen Abstrahl- oder Abwurfrichtung 29 des Sägestaubs zusammenfällt. Der Sägesstaub hat durch die kinetische Energie der Drehbewegung bereits eine relativ große Eintrittsgeschwindigkeit in den Bügelgriff 21. Die zusätzlich in gleicher Richtung (Pfeil 27 in Fig. 3) eingeblasene Abluft des Elektromotors unterstützt die Staub- oder Späneföderung und verhindert sicher ein Verstopfen des Bügelgriffs 21. Durch die Verschwenkbarkeit des Auslaßstutzens 24 am Bügelgriff 21 kann der am Auslaß 23 des Bügelgriffs 21 ausgeblasene Sägestaub in die Richtung gelenkt werden, in der er den Bediener am wenigsten stört. Außerdem kann an den Auslaßstutzen 24 ein Auffangbehälter oder ein Saugschlauch für eine Sägestaubabsaugung angeschlossen werden.

Das zweischalige Maschinengehäuse 10 ist aus Kunststoff gespritzt, wobei der Handgriff 11 und der Luftkanal 26 gleich mit angeformt werden. Der Bügelgriff 21 ist als Einlegeteil ausgeführt, kann unter Umständen aber auch mit angeformt werden. Der schneckenförmige, sich zum Einlaß 22 des Bügelgriffs 21 hin erweiternde Luftkanal 26 ist in Teilen an beiden Schalen angeformt, die sich beim Zusammensetzen der Schalen zu dem Luftkanal 26 ergänzen.

In einer Modifizierung der beschriebenen Elektrohandkreissägemaschine ist der Bügelgriff 21 schwenkbar um seinen an der Schutzhaube 15 mündenden Einlaß 22 und in beliebigen oder vorgegebenen Schwenkstellungen verrastbar ausgebildet, wodurch neben der Möglichkeit der Einstellung der Staubauswurfrichtung noch ein Ergonomieeffekt erzielt wird.

Die Erfindung ist nicht auf die beschriebene Elektrohandkreissägemaschine beschränkt. Sie kann bei allen handgeführten Elektrowerkzeugen mit rotierendem Werkzeug, wie z.B. Mauernutfräsen, Steinsägen, Winkelschleifer, Betonschleifer, Exzenterschleifer u. ä. verwendet werden.

## Patentansprüche

1. Elektrohandkreissägemaschine, mit einem Maschinengehäuse (10), in dem ein luftgekühlter Elektromotor mit einem auf dessen Abtriebswelle drehfest angeordneten Lüfterrad angeordnet ist, mit einem rotatorisch antreibbaren Werkzeug (14), das von einer Schutzhaube (15) mindestens teilweise abgedeckt ist, mit einem Handgriff (11) und einem Zusatzgriff (21) für eine beidhändige Führung der Maschine (11), wobei der Zusatzgriff (21) hohl ausgebildet und als Abführkanal für den vom Werkzeug (14) ausgeworfenen Materialabtrag genutzt ist und einen zum Inneren der Schutzhaube (15) hin offenen Einlass (22) und einen am dem Einlass (22) abgekehrten Griffende angeordneten Auslass (23) aufweist, **dadurch gekennzeichnet, dass** der Einlass (22) des Zusatzgriffs (21) so angeordnet ist, dass die Abstrahlrichtung (29) des das rotierende Werkzeug (14) verlassenden Materialabtrags vorzugsweise tangential vom Werkzeugumfang in den Einlass (22) des Zusatzgriffs (21) weist, dass das Maschinengehäuse (10) so ausgebildet ist, dass die den Elektromotor verlassende Motorabluft in den Einlass (22) des Zusatzgriffs (21) einströmt, dass die Einströmrichtung der in den Einlass (22) des Zusatzgriffs (21) eingeblasenen Motorabluft mit der Abstrahlrichtung des Materialabtrags vom Werkzeug (14) in den Einlass (22) des Zusatzgriffs (21) zusammenfällt und dass im Maschinengehäuse (10) ein mit einer Lufteintrittsöffnung für die Motorabluft versehener Luftkanal (26) ausgeformt ist, der schneckenförmig ausgebildet ist und von seiner Lufteintrittsöffnung bis hin zum Einlass (22) des Zusatzgriffs (21) als sich axial ausdehnende Spirale verläuft und sich zum Einlass (22) hin erweitert und in diesen mündet, wobei vom Lüfterrad angesaugte Luft den Elektromotor durchströmt, in die Lufteintrittsöffnung des Luftkanals (26) eingeblasen wird, den Luftkanal (26) durchströmt und in den Einlass (22) des Zusatzgriffs (21) eingeblasen wird.

2. Maschine nach Anspruch 1, **dadurch gekennzeichnet, dass** der Zusatzgriff(21) schwenkbar und in mindestens einer Schwenkstellung verrastbar ausgebildet ist.

3. Maschine nach Anspruch 1, **dadurch gekennzeichnet, dass** der Auslass (23) von einem Auslassstutzen (24) umschlossen ist, der vorzugsweise schwenkbar ausgebildet ist.

4. Maschinen nach einem der Ansprüche 1 bis 3, **dadurch gekennzeichnet, dass** der Zusatzgriff (21) als Bügelgriff ausgebildet ist, der mit einem Griffende an der Schutzhaube (15) ansetzt und am anderen Griffende an einem den Elektromotor aufnehmenden Gehäuseteil (12) des Maschinengehäuses (10) festgelegt ist.

## Claims

1. Portable electric circular saw, comprising a machine housing (10) in which an air-cooled electric motor with a fan impeller arranged on its output shaft in a rotationally fixed manner is arranged, comprising a rotationally drivable tool (14) which is at least partly covered by a protective hood (15), comprising a handle (11) and an auxiliary handle (21) for two-handed guidance of the machine (11), the auxiliary handle (21) being of hollow design and being used as a discharge passage for the removed material ejected by the tool (14) and having an inlet (22) open towards the interior of the protective hood (15) and an outlet (23) arranged on the handle end remote from the inlet (22), **characterized in that** the inlet (22) of the auxiliary handle (21) is arranged in such a way that the radiating direction (29) of the removed material leaving the rotating tool (14) preferably points tangentially from the tool circumference into the inlet (22) of the auxiliary handle (21), **in that** the machine housing (10) is designed in such a way the motor exhaust air leaving the electric motor flows into the inlet (22) of the auxiliary handle (21), **in that** the inflow direction of the motor exhaust air blown into the inlet (22) of the auxiliary handle (21) coincides with the radiating direction of the removed material from the tool (14) into the inlet (22) of the auxiliary handle (21), and **in that** an air passage (26) provided with an air-inlet opening for the motor exhaust air is formed in the machine housing (10), which air passage (26) is of helical design and runs as an axially extending spiral from its air-inlet opening right up to the inlet (22) of the auxiliary handle (21) and widens towards the inlet (22) and opens into the latter, air draw in by the fan impeller flowing through the electric motor, being blown into the air-inlet opening of the air passage (26), flowing through the air passage (26) and being blown into the inlet (22) of the auxiliary handle (21).

2. Machine according to Claim 1, **characterized in that** the auxiliary handle (21) is designed to be pivotable and so as to be capable of being latched in at least one pivoted position.

3. Machine according to Claim 1, **characterized in that** the outlet (23) is enclosed by an outlet connecting piece (24) which is preferably designed to be pivotable.

4. Machine according to one of Claims 1 to 3, **characterized in that** the auxiliary handle (21) is designed as a stirrup-shaped handle which is attached with one handle end to the protective hood (15) and is secured at the other handle end to a housing part (12), accommodating the electric motor, of the machine housing (10).

## Revendications

1. Scie circulaire portative électrique comprenant :
- un boîtier de machine (10) logeant un moteur électrique refroidi par air avec une roue de ventilateur solidaire de son arbre de sortie,
- un outil (14) pouvant être entraîné en rotation et recouvert au moins en partie par un capot de protection (15),
- une poignée (11) et une poignée auxiliaire (21) pour le guidage à deux mains de l'outil, la poignée auxiliaire (21) étant creuse pour servir de canal d'évacuation des résidus de matière projetés par l'outil (14) et présentant une entrée (22) ouverte en direction de l'intérieur du capot de protection (15) et une sortie (23) réalisée à l'extrémité de la poignée éloignée de l'entrée (22),
**caractérisée en ce que**
- l'entrée (22) de la poignée auxiliaire (21) est disposée pour que la direction de projection (29) des résidus de matière quittant l'outil tournant (14) sorte de préférence tangentiellement de la périphérie de l'outil vers l'entrée (22) de la poignée auxiliaire (21),
- le boîtier de machine (10) est constitué pour que l'air de refroidissement quittant le moteur électrique pénètre dans l'entrée (22) de la poignée auxiliaire (21) et que la direction de ce courant d'air coïncide avec la direction de projection des résidus de matière allant de l'outil (14) à l'entrée (22) de la poignée auxiliaire (21),
- le boîtier de machine (10) comporte un canal d'air (26) équipé d'une ouverture d'entrée pour l'air de refroidissement du moteur et qui a la forme d'une hélice s'étendant axialement en spirale de l'ouverture d'entrée d'air à l'entrée (22) de la poignée auxiliaire où elle s'élargit alors pour pénétrer dans cette entrée,
étant précisé que l'air aspiré par la roue de ventilateur traverse le moteur électrique, est soufflé dans l'ouverture d'entrée du canal d'air (26), traverse ce canal et est soufflé dans l'entrée (22) de la poignée auxiliaire.

2. Scie selon la revendication 1,
**caractérisée en ce que**
la poignée auxiliaire (21) est constituée de manière à pouvoir basculer et être bloquée dans au moins une position de basculement.

3. Scie selon la revendication 1,
**caractérisée en ce que**
la sortie (23) est entourée par une tubulure de sortie (24) constituée de manière à pouvoir basculer.

4. Scie selon une des revendications 1 à 3,
**caractérisée en ce que**
la poignée auxiliaire (21) a la forme d'un étrier avec une extrémité sur le capot de protection (15), tandis que l'autre extrémité est fixée à une partie (12) du boîtier de machine (10) qui loge le moteur électrique.
